# NEUE EUROPÄISCHE PATENTSCHRIFT

(11) **EP 1 819 567 B2**
(45) Veröffentlichungstag und Bekanntmachung des Hinweises auf die Entscheidung über den Einspruch: **04.11.2015**
(45) Hinweis auf die Patenterteilung: 16.02.2011
(21) Anmeldenummer: 05817921.9
(22) Anmeldetag: 09.12.2005
(51) Int. Cl.: B60T 13/74, F16D 65/14, F16D 65/18

(54) **Elektromechanische Feststell-Bremsanlage und elektronisches System zum betreiben derselben**
Electromechanical parking brake system and electronic system for the driving thereof
Système de frein de stationnement éléctromecanique et système éléctronique pour le faire fonctionner

(30) Priorität: 09.12.2004 DE 102004059546
(43) Veröffentlichungstag der Anmeldung: 22.08.2007
(73) Patentinhaber: Lucas Automotive GmbH, 56070 Koblenz (DE)
(72) Erfinder: KÖTH, Boris, 56191 Weitersburg (DE); SCHÖNWALD, Bernd, 71229 Leonberg (DE); LEITER, Ralf, 56743 Mendig (DE); GRIESER-SCHMITZ, Stefan, 56070 Koblenz (DE)
(74) Vertreter: Röthinger, Rainer
(86) Internationale Anmeldenummer: PCT/EP2005/013232
(87) Internationale Veröffentlichungsnummer: WO 2006/061238

(56) Entgegenhaltungen:
- EP-A- 0 995 659
- EP-A- 0 995 922
- EP-B1- 1 032 518
- DE-A1- 19 831 733
- DE-A1- 19 954 284
- US-A1- 2004 041 471
- US-B1- 6 213 567

## Beschreibung

Die Erfindung betrifft ein elektronisches System zum Betreiben einer elektromechanischen Feststell-Bremsanlage eines Fahrzeugs, mit einer Eingabeeinheit zum Erfassen eines Fahrerwunsches, der von einer Steuereinheit ausgewertet wird, die wenigstens eine Stelleinheit zum Betätigen wenigstens einer Bremse ansteuert.

Eine elektromechanische Feststell-Bremsanlage ist unter anderem aus der DE 197 32 168 C1 bekannt. Als Stelleinheit dient hier eine von einem Elektromotor betätigte Spindel/Mutter-Anordnung, mittels der der Bremskolben einer Bremse der Betriebs-Bremsanlage mechanisch festgestellt werden kann.

Aus EP 0 995 922 A2 ist ebenfalls eine Fahrzeugparkbremse bekannt. Den Radbremsen des Fahrzeuges ist jeweils ein Betriebsbremsaktuator und ein Parkbremsaktuator zugeordnet. Dabei betätigen Betriebsbremsaktuator und Parkbremsaktuator die jeweilige Radbremse über ein gemeinsames Betätigungselement. Als Eingabeeinheit für die Parkbremsfunktion ist ein Potentiometer vorgesehen. Zwei abgesicherte Leitungen verbinden dieses Potentiometer mit einer Spannungsquelle, über zwei weitere Leitungen ist das Potentiometer mit der zentralen Steuereinheit verbunden. Zusätzlich sind eine zentrale und mehrere dezentrale Bremssteuereinheiten vorgesehen. Die Bremssteuereinheiten und die Parkbremsaktuatoren sind über einen CAN-Datenbus miteinander verbunden.

Die den nächstliegenden Stand der Technik bildende DE 199 54 284 A1 offenbart eine Steuereinheit für eine Feststellbremse mit zwei Steuerkomponenten, die jeweils eines Eingabeeinheit und einer Stelleinheit der Feststellbremse zugeordnet sind, wobei die der Eingabeeinheit zugeordnete Steuerkomponente einen Ansteuerbefehl für eine Verriegelungsvorrichtung oder einen Fertstellbemsaktuator erzeugt. In einer Realisierung sind Druckregelmodule mit einer elektrischen Leistungsendstufe ausgebildet.
Schließlich lehrt die DE 198 31 733 A1 eine Überprüfung einer Parksperre eines Automatikgetriebes und einer fremdkraftbetätigten Feststellbremse auf ihre einwandfreie Funktion hin. Bei einen Funktionsausfall des einen Systems wird dann das jeweils andere System betätigt.

Aus der EP 1 128 999 B1 ist eine Eingabeeinheit zum Erfassen eines Fahrerwunsches für eine elektromechanische Feststell-Bremsanlage bekannt. Dabei steht die Eingabeeinheit mit einer elektronischen Steuereinheit in Verbindung, die ihrerseits die von der Eingabeeinheit gelieferten Signale unmittelbar in entsprechende Ansteuersignale für eine Stelleinheit umwandelt, um die Feststell-Bremsanlage in den gewünschten Betätigungszustand zu überführen.

Um auch im Fehlerfall eine Erkennung des Fahrerwunsches bezüglich einer Betätigung der Feststell-Bremsanlage, also Zuspannen oder Lösen, und gleichzeitig eine Fehlerdiagnose zu ermöglichen, muss gemäß der EP 1 128 999 B1 die Eingabeeinheit als Taster bzw. Wipptaster mit mehreren Schaltstellungen ausgeführt werden und in jeder Schaltstellung zumindest zwei redundante Signale an die elektronische Steuereinheit liefern.

Von daher besteht der Nachteil, dass für die elektrische Verbindung zwischen Eingabeeinheit und Steuereinheit eine Vielzahl von Leitungen parallel zu schalten ist. So müssen gemäß der EP 1 128 999 B1 bereits bei drei Schaltstellungen und zwei redundanten Signalen pro Schaltstellung einschließlich der Versorgungs- und Masseleitungen insgesamt acht Leitungen bereitgestellt werden. Das macht deutlich, wie aufwendig sich die elektrische Verbindung zwischen Eingabeeinheit und Steuereinheit gestaltet, zumal für jede Leitung eine zuverlässige elektrische Kontaktierung, z.B. Steckverbindung, sowohl auf Seite der Eingabeeinheit als auch auf Seite der Steuereinheit vorzusehen ist.

Der Erfindung liegt die Aufgabe zugrunde, den genannten Nachteilen unter Beibehaltung der Systemsicherheit entgegenzuwirken.

Zu Lösung der Aufgabe schlägt die Erfindung vor, dass die Steuereinheit wenigstens zwei Steuerkomponenten umfasst. Eine erste Steuerkomponente ist einer Eingabeeinheit zugeordnet und wenigstens eine zweite Steuerkomponente ist wenigstens einer Stelleinheit zugeordnet. Dabei umfasst die der wenigstens einen Stelleinheit zugeordnete zweite Steuerkomponente die zum Ansteuern der Stelleinheit erforderlichen Leistungsschalter wie z.B. Transistoren. Die erste Steuerkomponente und die wenigstens eine zweite Steuerkomponente stehen in einem Master-Slave-Verhältnis zueinander.

So kann die bei bekannten Systemen erforderliche Steuereinheit als solche entfallen, da sie in geeignete Steuerkomponenten aufgeteilt wird, die in geeigneter Weise auf die Eingabeeinheit und die wenigstens eine Stelleinheit örtlich sowie funktionell verteilt und dort integriert werden können.

Deshalb wird aber nicht nur der Aufwand für das Gehäuse und der Einbauraum der bei bekannten Systemen erforderlichen Steuereinheit eingespart, sondern vor allem reduziert sich der Aufwand für die elektrische Kontaktierung zwischen der Eingabeeinheit und der wenigstens einen Stelleinheit. Denn es kann eine aufwändige elektrische Verbindung zwischen der Eingabeeinheit und der sonst üblichen Steuereinheit eingespart werden, da z.B. die Eingabeeinheit und die erste Steuerkomponente auf einer gemeinsamen Leiterplatte angeordnet werden können. Ebenso kann die elektrische Verbindung zwischen der sonst üblichen Steuereinheit und der wenigstens einen Stelleinheit eingespart werden, die sich bei bekannten Systemen gleichfalls aufwändig gestaltet, da sie für die verhältnismäßig hohe Lasten der elektrischen Betätigung, z.B. Elektromotor oder Elektromagnet, der Stelleinheit ausgelegt werden muss.

In vorteilhafter Weise kann vorgesehen sein, dass die Steuerkomponente, die der Eingabeeinheit zugeordnet ist, die Zentrale des Systems ist, die den Fahrerwunsch auswertet und die entsprechende Ansteuerung (z.B. Zuspannen oder Lösen) der wenigstens einen Stelleinheit vornimmt. Folglich umfasst diese "zentrale" die heute bei einem elektronischen System übliche Rechner- bzw. Mikroprozessoreinheit, die den für die Feststell-Bremsanlage gewünschten Betätigungszustand steuert und/oder regelt und auf der sich der Steuer- und/oder Regelalgorithmus per Software implementieren lässt. Da sich die Eingabeeinheit ohnehin an einer vom Fahrer günstig zu bedienenden Stelle im Fahrzeuginnenraum befindet, ist die Rechner- bzw. Mikroprozessoreinheit in der Regel geschützt untergebracht.

Da die in der Eingabeeinheit integrierte Steuerkomponente keine Leistungsschalter aufweist, die die Eingabeeinheit einer thermischen Belastung aussetzen, sind für die erste Steuerkomponente keine aufwendigen Kühlmaßnahmen erforderlich.

Andererseits ist die dadurch in einer Stelleinheit verursachte zusätzliche thermische Belastung als weniger kritisch anzusehen, da die Stelleinheit elektrische Betätigungen aufweist, die aufgrund ihrer verhältnismäßig hohen elektrischen Last eine nicht unerhebliche Temperaturerzeugung aufweisen, für die ohnehin Kühlmaßnahmen getroffen werden.

Das "Auslagern" der Leistungsschalter hat weiterhin den Vorteil, dass die elektrische Verbindung zwischen den Steuerkomponenten der Eingabeeinheit und der wenigstens einen Stelleinheit mittels "einfacher" elektrischer Leitungen ausgestaltet werden kann, da sie nicht für hohe Stromlasten ausgelegt werden muss.

Sofern die Steuerkomponente der wenigstens einen Stelleinheit mit einer elektronischen Schnittstelle, die auch eine "einfache" Rechner- bzw. Mikroprozessoreinheit sein könnte, ausgerüstet ist, besteht der große Vorteil, dass die Steuerkomponenten über ein Kommunikationssystem (z.B. einen CAN-Bus, einen LIN-Bus oder ein anderes Bussystem) zusammenwirken können. Dabei könnte es sich sowohl um ein eigens für die Feststell-Bremsanlage vorgesehenes Kommunikationssystem handeln, es könnte aber auch ein im Fahrzeug ohnehin vorhandenes Kommunikationssystem mit verwendet werden, über das außerdem ein Zusammenwirken mit anderen Fahrzeugsystemen, z.B. einer mit ABS oder ESP ausgestatteten Betriebs-Bremsanlage oder einer Motorleistungssteuerung, möglich wäre.

In manchen Situationen kann es zweckmäßig sein, eine Redundanz bezüglich des Kommunikationssystems zwischen den Steuerkomponenten vorzusehen. Gemäß einer Weiterbildung dieses Ansatzes ist für zumindest eines der redundant vorgesehenen Kommunikationssysteme oder einen der redundant vorgesehenen Kommunikationssystem-Teile eine eigenständige Stromversorgung vorgesehen. Diese eigenständige Stromversorgung ist zweckmäßigerweise auch im geparkten Zustand des Fahrzeugs verfügbar. Auf diese Weise kann ein Nachspannen der Feststell-Bremse selbst bei abgestellter Zündung gewährleistet werden.

Die der Stelleinheit zugeordnete zweite Steuerkomponente befindet sich mit einer oder mehreren weiteren Systemeinheiten in Kommunikation. Die weitere Systemeinheit ist einem Automatikgetriebe zugeordnet, wobei die Systemeinheit mit einer Steuerkomponente vorgesehen ist, die mit der wenigstens einen zweiten Steuerkomponente zum Betätigen der Feststell-Bremsanlage kommuniziert. Zweckmäßigerweise ermöglicht die dem Automatikgetriebe zugeordnete weitere Systemeinheit eine automatische Verriegelung der Feststell-Bremsanlage in einer dem Zustand "Parken" zugeordneten Getriebestellung.

Die Erfindung wird im Folgenden anhand der Zeichnungen, in denen vier bevorzugte Ausführungsbeispiele erfindungsgemäßer elektronischer Systeme in Blockschaltbildern dargestellt sind, näher erläutert.

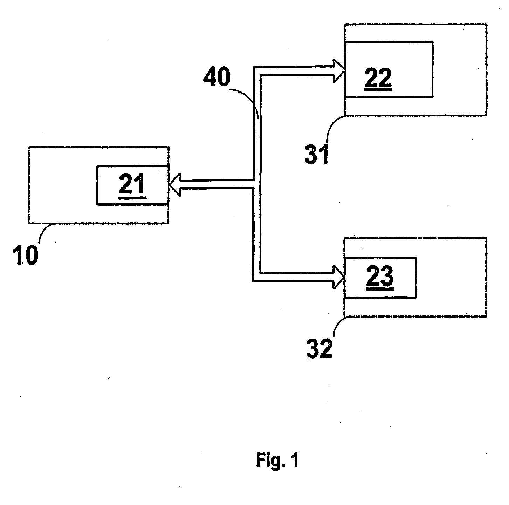

Gemäß dem in Fig. 1 dargestellten ersten Ausführungsbeispiel ist in eine Systemeinheit 10, die z.B. eine Eingabeeinheit sein kann, die mittels eines Schaltmittels einen Fahrerwunsch zur Betätigung der Feststell-Bremsanlage erfasst, eine elektronische Steuerkomponente 21 integriert.

Als so bezeichneter "Master" umfasst die elektronische Steuerkomponente 21 eine zentrale Rechnereinheit, die den Fahrerwunsch auswertet und die Ansteuerung der Feststell-Bremsanlage bestimmt. Dazu wirkt die elektronische Steuerkomponente 21 durch Datenaustausch über ein Kommunikationssystem 40, z.B. einen CAN-Bus oder einen LIN-Bus, mit anderen, als "Slave" bezeichneten, elektronischen Steuerkomponenten 22 und 23 zusammen, die in Stelleinheiten 31 und 32, die den Bremsen des Fahrzeugs zugeordnet sind, integriert sind. Aufgrund der Integration der elektronischen Steuerkomponenten 22 und 23 stellen die Stelleinheiten 31 und 32 so bezeichnete "Smart"-Aktuatoren dar.

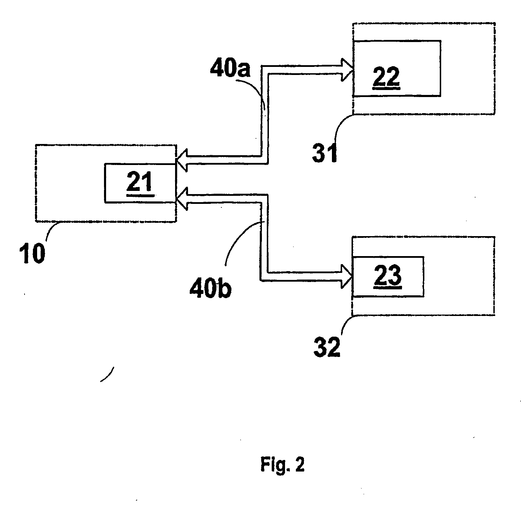

Gegenüber dem in Fig. 1 dargestellten Ausführungsbeispiel ist bei dem Ausführungsbeispiel gemäß Fig. 2 ein redundant ausgebildetes Kommunikationssystem 40a, 40b für die elektronischen Steuerkomponenten 22, 23 vorgesehen. Die elektronische Steuerkomponente 21 der Systemeinheit 10 wirkt über den ersten Kommunikationssystemteil 40a mit der elektronischen Steuerkomponente 22 der ersten Stelleinheit 31 und über den zweiten Kommunikationssystemteil 40b mit der elektronischen Steuerkomponente 23 der zweiten Stelleinheit 32 zusammen. Dadurch besteht die Möglichkeit, bei Ausfall eines der beiden Kommunikationssystemteile 40a, 40b wenigstens eine der Stelleinheiten 22, 23 noch ansteuern zu können. Dies bedeutet konkret für die Feststell-Bremsanlage, dass im Fehlerfall wenigstens eine der den Bremsen zugeordneten Stelleinheitein 31, 32 noch betätigt werden kann, um die gesetzlichen Mindestanforderung (z.B. Halten des Fahrzeugs an einem Hügel mit einer Neigung von 8%) zu erfüllen.

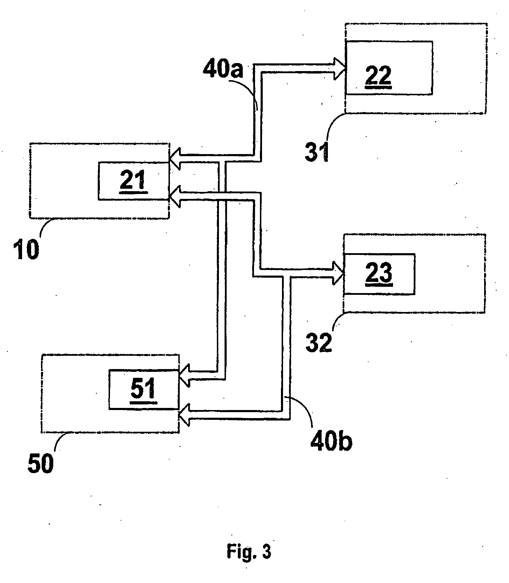

Das in Fig. 2 gezeigte Ausführungsbeispiel erweiternd, umfasst das in Fig. 3 gezeigte Ausführungsbeispiel eine weitere Systemeinheit 50 mit einer eigenen elektronischen Steuerkomponente 51, die über ein redundant ausgebildetes Kommunikationssystem 40a, 40b mit den elektronischen Steuerkomponenten 22 und 23 zusammenwirkt. Die redundant vorgesehenen Kommunikationssystemteile 40a, 40b sind wie im zweiten Ausführungsbeispiel parallel zueinander vorgesehen.

Eine geeignete Anwendung für das Ausführungsbeispiel gemäß Fig. 3 ist dann gegeben, wenn eine Betätigung der Stelleinheiten 31 und 32 bzw. der diesen zugeordneten Bremsen auch unabhängig von der Systemeinheit 10 erfolgen soll. Dies ist beispielsweise dann der Fall, wenn es sich bei der Systemeinheit 50 um die Steuereinheit eines automatischen Getriebes handelt, bei dem z.B. in der mit "Parken" oder kurz "P" bezeichneten Getriebestellung eine automatische Verriegelung der elektromechanischen Feststell-Bremsanlage erfolgt. Hier können Aufwand und Kosten für die sonst übliche Getriebeverriegelung (Parksperre) eingespart werden.

Eine Betätigung der Feststell-Bremsanlage ist gemäß dem in Fig. 3 gezeigten Ausführungsbeispiel daher sowohl mittels ihres eigentlichen Bedienelementes, der Eingabeeinheit 10, möglich, als auch mittels des Bedienelementes der Systemeinheit 50, das im Fall eines automatischen Getriebes dessen vom Fahrer zu bedienender Wählhebel ist. Selbiges trifft natürlich auch dann zu, wenn es sich bei der Systemeinheit 50 um die Steuereinheit einer Diebstahlsicherung, eines Zündschlosses usw. handelt. Auch hier besteht der Vorteil, dass die jeweilige Systemeinheit 50 wegen des Zugriffes auf das Kommunikationssystem 40a bzw. 40b nicht mit zusätzlichen, teuren Leistungsschaltern ausgestattet werden braucht, um eine Betätigung der Feststell-Bremsanlage zu bewirken.

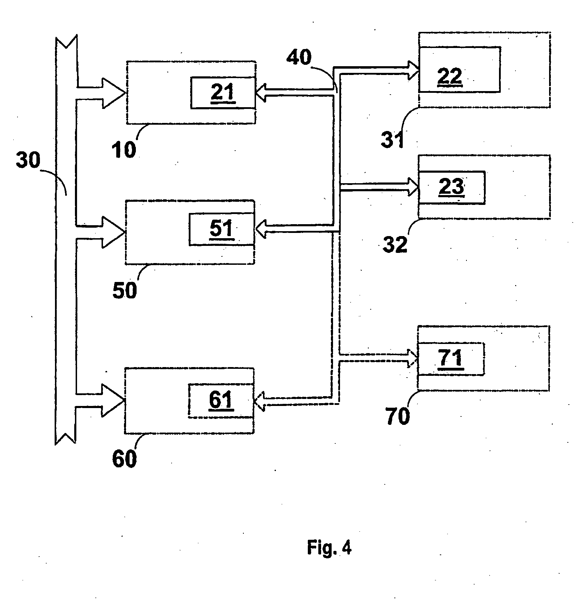

Bei dem Ausführungsbeispiel gemäß Fig. 4 ist wie bei dem Ausführungsbeispiel gemäß Fig. 1 ein gemeinsames Kommunikationssystem 40 gezeigt. Des Weiteren ist ein standardmäßiges Kommunikationssystem 30 in Gestalt eines CAN-Bus vorgesehen. An das Kommunikationssystem 40 sind zusätzliche elektrische Steuerkomponenten 71 von weiteren Stelleinheiten 70 angeschlossen. Als Beispiel sei eine Lenkradverriegelung erwähnt, die ergänzend zur im Zusammenhang mit dem Ausführungsbeispiel gemäß Fig. 3 erwähnten Verriegelung der elektromechanischen Feststell-Bremsanlage betätigt wird, um das Lenkrad bei geparktem Fahrzeug zum Zweck der Diebstahlsicherung zu arretieren.

Ebenso kann es von Vorteil sein, wenn an das Kommunikationssystem 40 elektrische Steuerkomponenten 61 von im Fahrzeug ohnehin vorhandenen Systemeinheiten 60, z.B. der mit ABS oder ESP ausgestatteten Betriebs-Bremsanlage oder der Motorleistungssteuerung, angeschlossen sind, um z.B. während automatisierter Anfahr- und Anhaltevorgänge an Steigungen oder im "Stop-and-Go"-Verkehr eine Betätigung der Feststell-Bremsanlage unabhängig von der Systemeinheit 10 vorzunehmen.

Grundsätzlich kann das Kommunikationssystem ein im Fahrzeug ohnehin vorhandenes Kommunikationssystem (z.B. CAN-Bus oder LIN-Bus, vgl. Fig. 4) sein oder ein solches mit verwenden. Für die Systemsicherheit ist es aber von Vorteil, das Kommunikationssystem der Feststell-Bremsanlage als eigenständiges System auszugestalten. Denn so kann selbst bei Ausfall oder beim Abschalten des im Fahrzeug ohnehin vorhandenen Kommunikationssystems die Feststell-Bremsanlage noch betätigt (z.B. im geparkten Zustand des Fahrzeugs nachgespannt) werden. Dabei besteht eine besonders hohe Systemsicherheit, wenn für das Kommunikationssystem der Feststell-Bremsanlage eine eigenständige Stromversorgung vorgesehen ist.

Es versteht sich, dass die bei den Ausführungsbeispielen gemäß Fig. 1 bis 4 erwähnten Merkmale und Vorteile untereinander frei kombinierbar sind. So kann bei dem Ausführungsbeispiel gemäß Fig. 4 z.B. auch die Verwendung eines redundanten Kommunikationssystems wie bei den Ausführungsbeispielen gemäß Fig. 2 und 3 vorteilhaft sein.

Das hier vorgeschlagene "Master-Stave"-Konzept gestallet eine Optimierung der Kontaktierung und Verkabelung sowie eine damit einhergehende Eliminierung möglicher Stör- und Fehlerquellen.

## Patentansprüche

1. Elektronisches System zum Betreiben einer elektromechanischen Feststell-Bremsanlage eines Fahrzeugs, mit wenigstens einer Eingabeeinheit (10) zum Erfassen eines Fahrerwunsches, der von einer Steuereinheit ausgewertet wird, die wenigstens eine Stelleinheit (31, 32) zum Betätigen wenigstens einer Bremse ansteuert, wobei
die Steuereinheit wenigstens zwei Steuerkomponenten (21, 22, 23) umfasst, von denen eine erste Steuerkomponente (21) der Eingabeeinheit (10) zugeordnet ist und wenigstens eine zweite Steuerkomponente (22, 23) der wenigstens einen Stelleinheit (31, 32) zugeordnet ist,
wobei die erste Steuerkomponente (21) und die wenigstens eine zweite Steuerkomponente (22, 23) in einem Master-Slave-Verhältnis zueinander stehen und die wenigstens eine zweite Steuerkomponente (22, 23), die der wenigstens einen Stelleinheit (31, 32) zugeordnet ist, zum Ansteuern der Stelleinheit erforderliche Leistungsschalter umfasst, wobei ferner eine einem Automatikgetriebe zugeordnete Systemeinheit (50) mit einer dritten Steuerkomponente (51) vorgesehen ist, die mit der wenigstens einen zweiten Steuerkomponente (22, 23) der wenigstens einen Stelleinheit (31, 32) zum Betätigen der Feststell-Bremsanlage kommuniziert.

2. System nach Anspruch 1, **dadurch gekennzeichnet, dass** die erste Steuerkomponente (21), die der Eingabeeinheit (10) zugeordnet ist, den Fahrerwunsch auswertet und die Ansteuerung der wenigstens einen Stelleinheit (31, 32) festlegt.

3. System nach Anspruch 1 oder 2, **dadurch gekennzeichnet, dass** die Steuerkomponenten (21, 22, 23) über wenigstens ein Bussystem (30, 40, 40a, 40b) miteinander kommunizieren.

4. System nach einem der Ansprüche 1 bis 3, **dadurch gekennzeichnet, dass** die Steuerkomponenten (21, 22, 23) über ein redundant ausgelegtes Kommunikationssystem (40a, 40b) miteinander kommunizieren.

5. System nach einem der Ansprüche 1 bis 4, **dadurch gekennzeichnet, dass** die erste Steuerkomponente (21) örtlich im Bereich der Eingabeeinheit (10) vorgesehen ist.

6. System nach einem der Ansprüche 1 bis 5, **dadurch gekennzeichnet, dass** die wenigstens eine zweite Steuerkomponente (22, 23) in die wenigstens eine Stelleinheit (31, 32) integriert ist.

7. Elektromechanische Feststell-Bremsanlage, umfassend ein elektronisches System nach einem der Ansprüche 1 bis 6.

## Claims

1. An electronic system for operating an electromechanical parking brake device of a vehicle, with at least one input unit (10) for detecting a driver command which is evaluated by a control unit which activates at least one actuating unit (31, 32) for actuating at least one brake,
wherein the control unit comprises at least two control components (21, 22, 23), of which a first control component (21) is associated with the input unit (10) and at least one second control component (22, 23) is associated with the at least one actuating unit (31, 32),
wherein the first control component (21) and the at least one second control component (22, 23) are in a master-slave relationship and the at least one second control component (22, 23) which is associated with the at least one actuating unit (31, 32) comprises power switches which are required to activate the actuating unit,
wherein further a system unit (50) associated with an automatic transmission is provided, the system unit (50) having a third control component (51) which communicates with the at least one second control component (22, 23) of the at least one actuating unit (31, 32) for actuating the parking brake device.

2. The system according to claim 1, **characterised in that** the first control component (21) which is associated with the input unit (10) evaluates the driver command and determines the activation of the at least one actuating unit (31, 32).

3. The system according to claim 1 or 2, **characterised in that** the control components (21, 22, 23) communicate with one another via at least one bus system (30, 40, 40a, 40b).

4. The system according to any one of claims 1 to 3, **characterised in that** the control components (21, 22, 23) communicate with one another via a redundantly designed communication system (40a, 40b).

5. The system according to any one of claims 1 to 4, **characterised in that** the first control component (21) is provided locally in the region of the input unit (10).

6. The system according to any one of claims 1 to 5, **characterised in that** the at least one second control component (22, 23) is integrated into the at least one actuating unit (31, 32).

7. An electromechanical parking brake device, comprising an electronic system according to any one of claims 1 to 6.

## Revendications

1. Système électronique pour faire fonctionner un système de frein de stationnement électromécanique d'un véhicule, comprenant au moins une unité d'entrée (10) pour saisir un souhait du conducteur, lequel souhait est analysé par une unité de commande qui assure la commande d'au moins une unité de réglage (31, 32) pour actionner au moins un frein,
ladite unité de commande comportant au moins deux composants de commande (21, 22, 23) dont un premier composant de commande (21) est associé à l'unité d'entrée (10) et au moins un deuxième composant de commande (22, 23) est associé à ladite au moins une unité de réglage (31, 32),
le premier composant de commande (21) et ledit au moins un deuxième composant de commande (22, 23) étant liés par une relation maître-esclave et ledit au moins un deuxième composant de commande (22, 23), qui est associé à ladite au moins une unité de réglage (31, 32), comportant les commutateurs de puissance nécessaires à la commande de l'unité de réglage, une unité de système (50) associée à une boîte de vitesse automatique et pourvue d'un troisième composant de commande (51) étant en outre prévue, lequel composant communique avec ladite au moins un deuxième composant de commande (22, 23) de ladite au moins une unité de réglage (31, 32) pour actionner le système de frein de stationnement.

2. Système selon la revendication 1, **caractérisé en ce que**
le premier composant de commande (21), qui est associé à l'unité d'entrée (10), analyse le souhait du conducteur et détermine la commande de ladite au moins une unité de réglage (31, 32).

3. Système selon la revendication 1 ou 2, **caractérisé en ce que**
les composants de commande (21, 22, 23) communiquent entre eux par le biais d'au moins un système de bus (30, 40 40a, 40b).

4. Système selon l'une des revendications 1 à 3, **caractérisé en ce que**
les composants de commande (21, 22, 23) communiquent entre eux par le biais d'un système de communication (40a, 40b) redondant.

5. Système selon l'une des revendications 1 à 4, **caractérisé en ce que**
le premier composant de commande (21) est localement prévu dans la zone de l'unité d'entrée (10).

6. Système selon l'une des revendications 1 à 5, **caractérisé en ce que**
ledit au moins un deuxième composant de commande (22, 23) est intégré dans ladite au moins une unité de réglage (31, 32).

7. Système de frein de stationnement électromécanique, comportant un système électronique selon l'une des revendications 1 à 6.
